# EUROPEAN PATENT APPLICATION

(11) **EP 3 578 689 A1**
(43) Date of publication of application: **11.12.2019**
(21) Application number: 19178484.2
(22) Date of filing: 05.06.2019
(51) Int. Cl.: C23C 24/04, B05B 7/14, B05B 7/16

(54) **COLD SPRAY DEPOSITION APPARATUS, SYSTEM AND METHOD**

(30) Priority: 05.06.2018 US 201816000117
(71) Applicant: United Technologies Corporation, Farmington, CT 06032 (US)
(72) Inventor: BINEK, Lawrence, Glastonbury, CT Connecticut 06033 (US); NARDI, Aaron T., East Granby, CT Connecticut 06026 (US); SIOPIS, Matthew J., West Hartford, CT Connecticut 06107 (US)
(74) Representative: Dehns

(57) **Abstract**

A cold spray deposition apparatus includes a powder injection line (204), a gas injection port (212) that supplies a gas to a chamber (214), a cooling input port (208a), a cooling output port (208b), and a cooling channel (232a) wrapped around the powder injection line (204) in the chamber (214), the cooling channel (232a) fluidly coupled to the cooling input port (208a) and the cooling output port (208b).

## Description

### BACKGROUND

Engines, such as those which power aircraft and industrial equipment, may employ a compressor to compress air that is drawn into the engine and a turbine to capture energy associated with a combustion of a fuel-air mixture. Additive manufacturing techniques have been used in the manufacture of engine components. Additive manufacturing techniques offer a number of benefits relative to conventional manufacturing techniques. For example, additive manufacturing tends to promote consistency/repeatability in terms of a build of a first lot of components relative to a second lot of components.

Cold spray deposition is a form of additive manufacturing that has garnered extensive interest. In cold spray deposition, a powder material is deposited onto a substrate using a gas. The gas, which is typically nitrogen or helium, is provided at elevated pressure and temperature (e.g., potentially on the order of 70 bar and 1100°C). Nitrogen tends to be preferred (relative to helium) because nitrogen is inexpensive and readily available.

The term 'cold' in cold spray deposition refers to the fact that the powder material is not (purposefully) melted. Instead, the powder is deposited at supersonic speeds such that the powder plasticizes on impact with the substrate, forming a solid-state metallurgical bond with the substrate.

The use of cold spray deposition presents challenges. For example, the velocity of the powder is a function of the temperature of the gas that is used; e.g., speed increases with temperature. However, the powder material may melt if a temperature threshold is exceeded. Additionally, if the powder material is subjected to temperatures above a threshold in, e.g., a nozzle the powder material may tend to foul (e.g., clog) the nozzle. A fouled nozzle may tend to introduce inconsistencies in a workpiece (potentially leading to costly rework or scrap), may lead to operational downtime, and may lead to a costly/expensive and time-consuming maintenance procedure to clean/de-foul the nozzle.

Accordingly, what is needed is an ability to utilize cold spray deposition techniques with increased/enhanced reliability in terms of, e.g., powder material integrity and nozzle operability.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a cold spray deposition apparatus comprising: a powder injection line, a gas injection port that supplies a gas to a chamber, a cooling input port, a cooling output port, and a cooling channel wrapped around the powder injection line in the chamber, the cooling channel fluidly coupled to the cooling input port and the cooling output port. In some embodiments, the cooling channel conveys a cooling fluid from the cooling input port to the cooling output port. In some embodiments, the cooling fluid includes water. In some embodiments, the cooling fluid includes a second gas. In some embodiments, the second gas includes at least one of nitrogen or carbon dioxide. In some embodiments, the cold spray deposition apparatus further comprises: a sensor port coupled to at least one sensor that measures a parameter of the chamber. In some embodiments, the cold spray deposition apparatus further comprises: a nozzle that receives powder material from the powder injection line and ejects the powder material upon a substrate. In some embodiments, the cold spray deposition apparatus further comprises: a powder injection shield that isolates the cooling channel from the gas in the chamber.

Aspects of the disclosure are directed to a cold spray deposition system comprising: a cooling fluid source, and a cold spray deposition apparatus that includes: a powder injection line, a gas injection port that supplies a gas to a chamber, a cooling input port fluidly coupled to the cooling fluid source, a cooling output port fluidly coupled to the cooling fluid source, and a cooling channel wrapped around the powder injection line in the chamber, the cooling channel fluidly coupled to the cooling input port and the cooling output port. In some embodiments, the cooling fluid source supplies a cooling fluid to the cooling input port, and the cooling output port returns the cooling fluid to the cooling fluid source. In some embodiments, the cooling fluid includes water. In some embodiments, the cooling fluid includes a second gas. In some embodiments, the second gas includes at least one of nitrogen or carbon dioxide. In some embodiments, the cold spray deposition apparatus includes at least one sensor port, and the system further comprises: at least one sensor coupled to the at least one sensor port, where the at least one sensor measures a characteristic of the chamber. In some embodiments, the at least one sensor includes a thermocouple that measures a temperature of the chamber. In some embodiments, the cold spray deposition apparatus includes a powder injection shield that isolates the cooling channel from the gas in the chamber. In some embodiments, the gas is nitrogen. In some embodiments, the cooling channel is shaped as at least one of a coil or a helix.

### BRIEF DESCRIPTION OF THE DRAWINGS

The present disclosure is illustrated by way of example and not limited in the accompanying figures in which like reference numerals indicate similar elements. The figures are not necessarily drawn to scale unless explicitly indicated otherwise.
FIG. 1 is a side cutaway illustration of a gas turbine engine.
FIGS. 2A-2E illustrate a cold spray deposition apparatus in accordance with aspects of this disclosure.
FIGS. 3A-3B illustrate a nozzle of a cold spray deposition apparatus in accordance with aspects of this disclosure.
FIGS. 4A-4D illustrate a nozzle of a cold spray deposition apparatus with surface treatment features in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

Aspects of the disclosure are directed to a cooling of one or more portions/sections of an apparatus, such as for example an apparatus used in conjunction with a cold spray deposition technique. In some embodiments, the cooling may be used to ensure that a material (e.g., a powder material) that is used remains below a melting point threshold. In some embodiments, the cooling that is provided may ensure that a nozzle of the apparatus is not fouled (e.g., clogged). In some embodiments, the nozzle may include one or more features (e.g., surface treatments) that may help to ensure that the nozzle is not fouled.

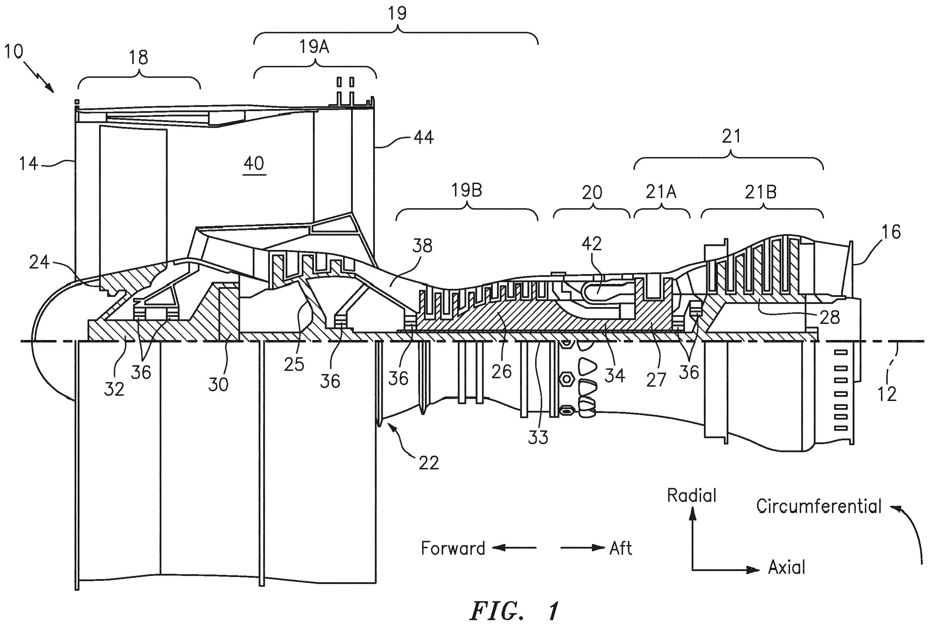

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36 (e.g., rolling element and/or thrust bearings). Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan rotor 24 from the rotation of the rotor 25 of the low pressure compressor section 19A and the rotor 28 of the low pressure turbine section 21B. For example, such an FDGS may allow the fan rotor 24 to rotate at a different (e.g., slower) speed relative to the rotors 25 and 28.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

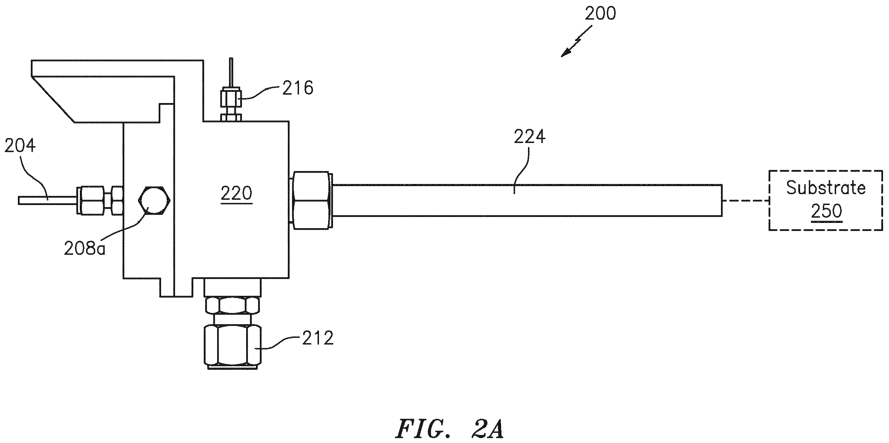

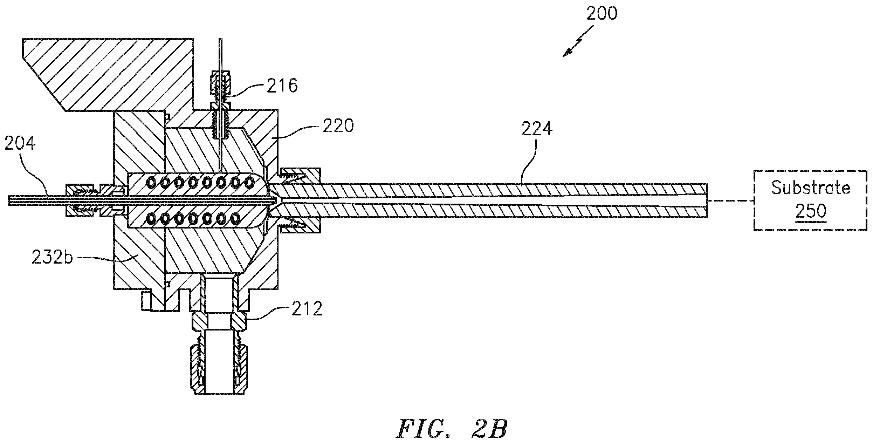

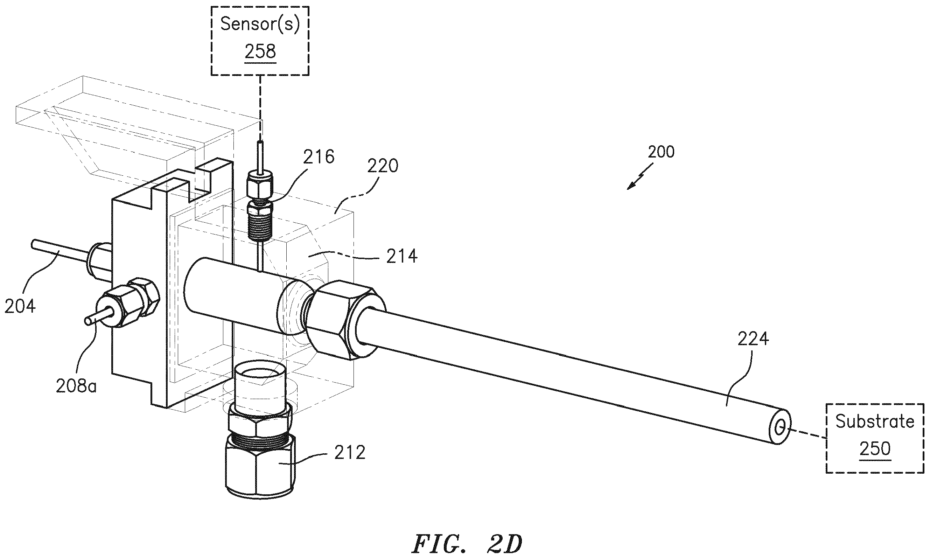

Referring to FIGS. 2A-2E, a cold spray deposition apparatus 200 in accordance with aspects of this disclosure is shown. The apparatus 200 may include one or more of the components that are discussed below.

The apparatus 200 may include a powder injection line 204. The powder injection line 204 may be used to supply/feed powder into the apparatus (where the powder is ultimately deposited upon a substrate 250).

The apparatus 200 may include a powder injection line cooling input port 208a and an associated powder injection line cooling output port 208b. The input port 208a and the output port 208b may be used to cool the powder injection line 204 as is described in further detail below.

The apparatus 200 may include a gas injection port 212. The gas injection port 212 may be used to supply a gas to a gas chamber 214 of the apparatus 200. The gas chamber 214 may be defined by one or more walls and may form a substantially fluid-tight enclosure.

The apparatus 200 may include a sensor port 216. The port 216 may be coupled to one or more sensors 258 that may measure one or more characteristics associated with (the operation of) the apparatus 200. For example, the sensors 258 may include a thermocouple that may be used to measure/monitor a temperature of the gas in the chamber 214. The output of the thermocouple may be monitored, potentially as part of a control loop, to adjust the temperature of the gas input via the gas injection port 212.

The apparatus 200 may include a housing 220. The housing 220 may at least partially contain/enclose the chamber 214. The housing 220 may define/include a rigid body that may serve to provide support for the apparatus 200.

The apparatus 200 may include a nozzle 224. The nozzle 224 may be in communication with the powder injection line 204 and/or the gas that is present in the chamber 214. The nozzle 224 may eject the powder material (as entrained in the gas) onto the substrate 250 as part of a cold spray deposition manufacturing process to form a workpiece (e.g., a component of an engine).

As described above, the (heated/pressurized) gas that is admitted into the chamber 214 via the gas injection port 212 is used to impart speed to the powder material. In order to obtain a critical velocity for successful cold spray deposition (e.g., a speed that is greater than a threshold), the temperature may need to exceed a temperature threshold. However, for certain powders, exceeding the temperature threshold may cause the powder material to melt.

In order to reduce the likelihood of (e.g., in order to avoid) the powder melting in the powder injection line 204, a powder injection cooling helix 232a may be wrapped around the powder injection line 204 within, e.g., the chamber 214. The helix 232a may engage the powder injection line 204 in a heat-exchange relationship. For example, the helix 232a may reduce the temperature of the powder injection line 204 by drawing heat out of/away from the powder injection line 204 in order to reduce a temperature of the powder material contained within the powder injection line 204.

The helix 232a may be fluidly coupled to the powder injection line cooling input port 208a and the powder injection line cooling output port 208b. The powder injection line cooling input port 208a, the helix 232a, and the powder injection line cooling output port 208b may form part of a cooling circuit in conjunction with a cooling fluid source 262 (which may include one or more pumps, tanks, etc.). Cooling fluid provided by the cooling fluid source 262 may be admitted to the powder injection line cooling input port 208a; from the powder injection line cooling input port 208a, the cooling fluid may flow through the helix 232a and then be returned to the source 262 via the powder injection line cooling output port 208b. The cooling fluid provided by the cooling fluid source 262 may include water, gas (e.g., nitrogen, carbon dioxide), etc.

In some embodiments, the helix 232a may be encased/enclosed by a powder injection shield 232b. The shield 232b may shield/mask the helix 232a from the elevated temperatures associated with the gas in the chamber 214. While described as separate components, in some embodiments the helix 232a and the shield 232b may be manufactured (e.g., additively manufactured) as a unitary structure/piece.

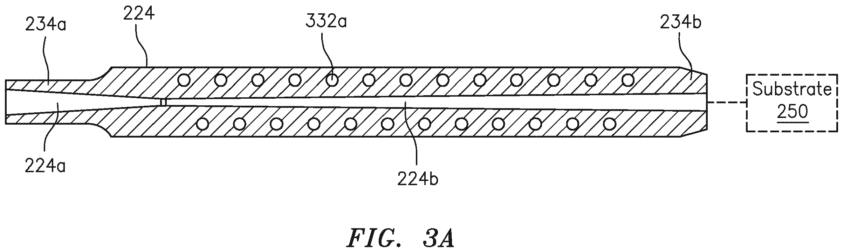

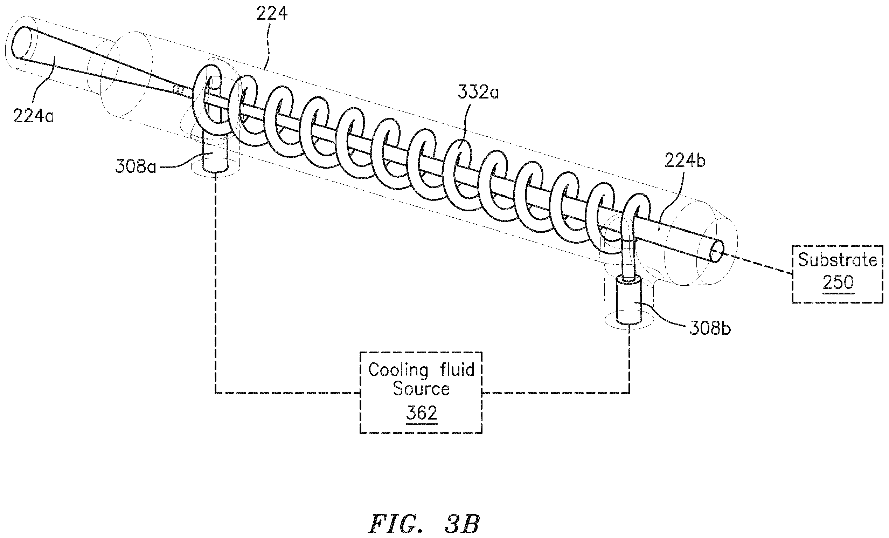

Referring to FIGS. 3A-3B, a closer view of the nozzle 224 is shown. The nozzle 224 may include a first, convergent section 224a proximate a nozzle powder inlet 234a and a second, divergent section 224b proximate a nozzle powder outlet 234b, where the sections 224a and 224b may be used to channel/convey the powder material to the substrate 250. As one skilled in the art would appreciate the parameters (e.g., length, degree of taper, etc.) associated with the sections 224a and 224b may be based on fluid (e.g., gas) dynamic, boundary layer conditions, materials that are used, velocities that are needed/required, etc.

In some instances, the powder material that is contained within the nozzle 224 may be prone to fouling (e.g., clogging) the nozzle 224. In particular, the divergent section 224b of the nozzle 224 may be prone to fouling when using certain powder feedstock at various operating conditions.

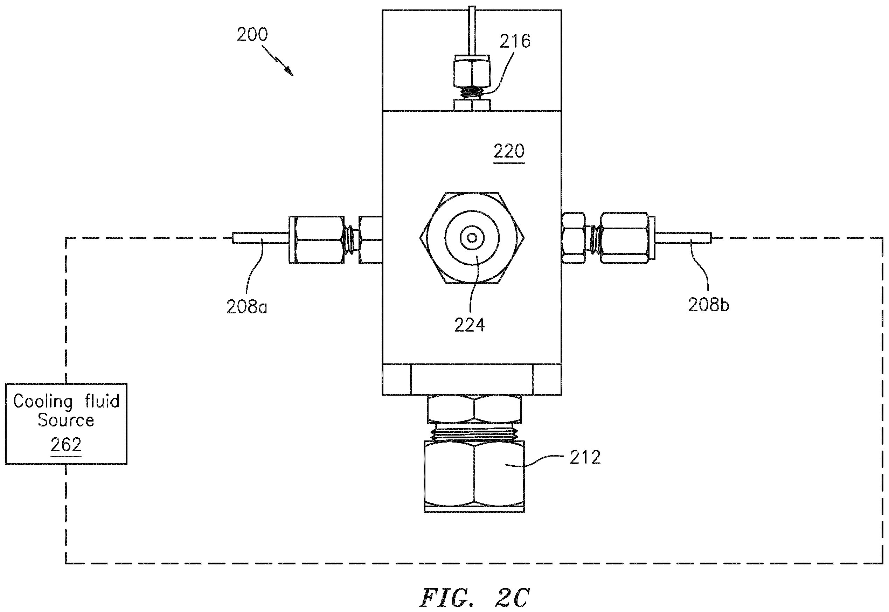

In order to reduce the likelihood of (and even completely avoid) fouling the nozzle 224, a nozzle cooling helix 332a may be wrapped around, e.g., the divergent section 224b. The helix 332a may be coupled to a nozzle cooling input port 308a and a nozzle cooling output port 308b. The nozzle cooling input port 308a, the helix 332a, and the nozzle cooling output port 308b may form part of a cooling circuit in conjunction with a cooling fluid source 362 (which may include one or more pumps, tanks, etc.). The cooling fluid source 362 may correspond to the cooling fluid source 262 of FIG. 2C.

Cooling fluid provided by the cooling fluid source 362 may be admitted to the nozzle cooling input port 308a; from the nozzle cooling input port 308a, the cooling fluid may flow through the helix 332a and then be returned to the source 362 via the nozzle cooling output port 308b. The cooling fluid provided by the cooling fluid source 362 may include water, gas (e.g., nitrogen, carbon dioxide), etc.

While the cooling channels 232a and 332a are shown in the drawing figures and described above as being helixes/coils, the structures 232a and 332a may take other shapes/form factors in some embodiments.

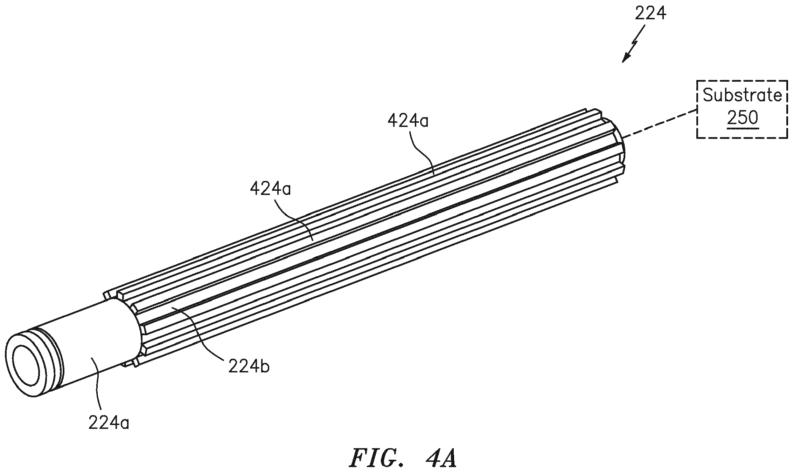

FIGS. 4A-4B illustrate the nozzle 224 in accordance with additional embodiments. In particular, FIGS. 4A-4B illustrate surface treatments/ornamentations that may be applied to the exterior of the divergent section 224b of the nozzle 224. In particular, the surface treatments shown in FIGS. 4A-4B include one or more raised features, such as for example raised features 424a and 424b.

As shown in FIG. 4A, the raised features 424a may take the form of one or more ridges that may protrude/project from the exterior surface of the divergent section 224b. The ridges 424a may be distributed around the circumference of the divergent section 224b and may run substantially parallel along the length/longitudinal axis of the divergent section 224b.

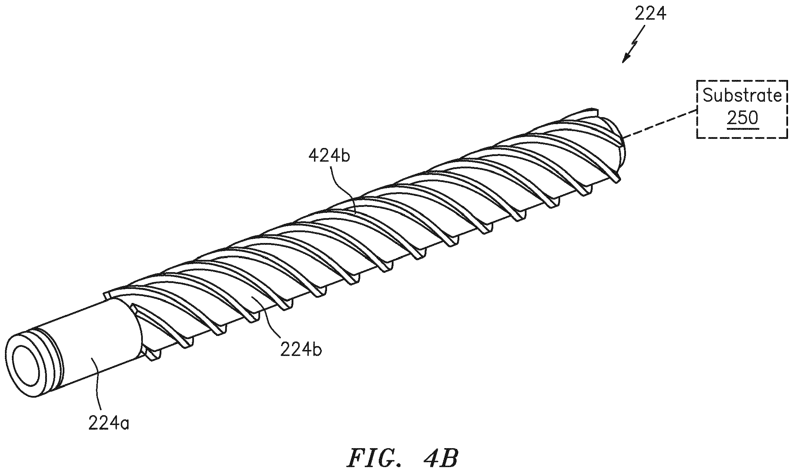

The raised features 424b may be similar to the raised features 424a insofar as the raised features 424b may include a ridge that projects from the exterior surface of the divergent section 224b. However, as shown in FIG. 4B the raised features/ridge 424b may be shaped as a coil/helix around the exterior of the divergent section 224b.

In some embodiments, a cooling fluid may be applied to the raised features 424a and/or the raised features 424b. The raised features 424a/424b, in conjunction with the application of the cooling fluid, may reduce a temperature of the divergent section 224b (thereby reducing the likelihood of fouling the nozzle 224).

In terms of comparing/contrasting the raised features 424a and 424b from a perspective of cooling/temperature reduction, the raised features 424a may tend to promote more uniform cooling over the length of the divergent section 224b relative to the raised features 424b. The raised features 424b may tend to promote more uniform cooling around the circumference of the divergent section 224b relative to the raised features 424a.

From a perspective of manufacturing, the raised features 424a may be easier/simpler to manufacture relative to the raised features 424b. In some embodiments, the raised features 424a and/or the raised features 424b may be manufactured via an additive manufacturing technique. Other techniques (e.g., casting, forging, machining [e.g., electro discharge machining (EDM)], chemical etching, etc.) may be used to manufacture the raised features 424a and/or the raised features 424b.

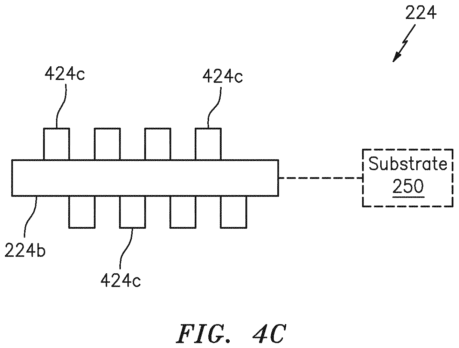

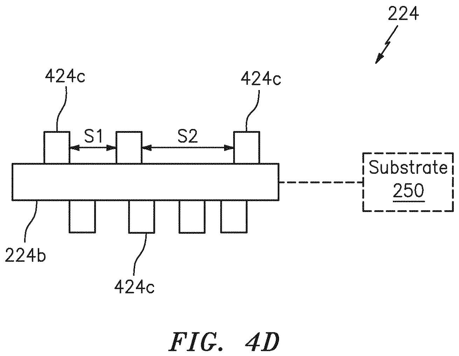

FIG. 4C illustrates an embodiment where the nozzle 224 includes pin fins 424c that protrude/project from an exterior surface of the divergent section 224b. While adjacent pin fins 424c are shown in FIG. 4C as being equidistantly spaced from one another, a nonuniform distribution/spacing between (adjacent) pin fins 424c may be used in some embodiments (see, e.g., FIG. 4D wherein a first spacing S1 may be different from a second spacing S2). More generally, parameters of the pin fins 424c in terms of, e.g., pattern/distribution, count, dimension (e.g., height, length, width), etc., may be based on one or more application requirements.

In some embodiments, the mere presence of the raised features 424a-424c may help to withdraw heat from the divergent section 224b, similar to fins on a radiator. In other words, the raised features 424a-424c may help to reduce the temperature of the divergent section 224b even in the absence of an application of cooling fluid to, e.g., the raised features 424a-424c.

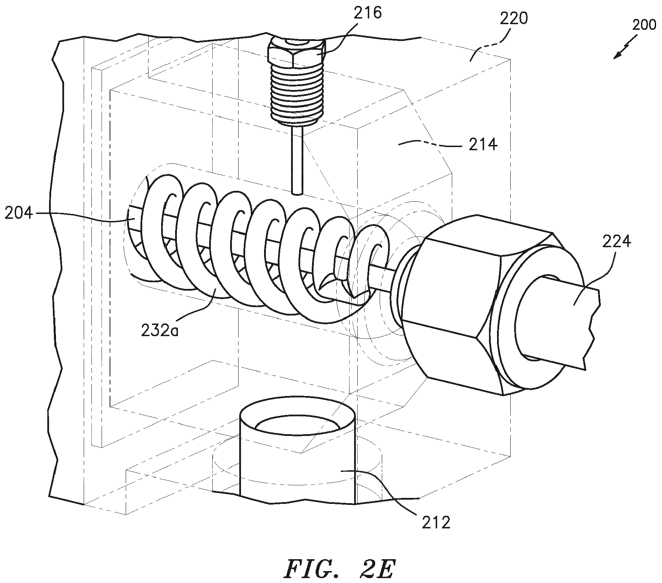

While the surface treatments are described above in conjunction with FIGS. 4A-4C in terms of the divergent section 224b, in some embodiments surface treatments may be applied to other portions of the nozzle 224 (e.g., the convergent section 224a). In some embodiments, surface treatments may be applied to other components, such as for example the powder injection line 204 of FIG. 2E.

Aspects of the disclosure are directed to systems and methods that may be used to increase the reliability of a cold spray deposition apparatus. In some embodiments, one or more portions of the apparatus may be cooled to avoid melting powder material/feedstock. In some embodiments, one or more portions of the apparatus may be cooled to avoid fouling (e.g., clogging) a nozzle of the apparatus. In some embodiments, a portion of the nozzle may include one or more surface features/treatments that may reduce a temperature of that portion of the nozzle.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A cold spray deposition apparatus comprising:
a powder injection line (204);
a gas injection port (212) that supplies a gas to a chamber (214);
a cooling input port (208a);
a cooling output port (208b); and
a cooling channel (232a) wrapped around the powder injection line (204) in the chamber (214), the cooling channel (232a) fluidly coupled to the cooling input port (208a) and the cooling output port (208b).

2. The cold spray deposition apparatus of claim 1, further comprising:
a sensor port (216) coupled to at least one sensor (258) that measures a parameter of the chamber (214).

3. The cold spray deposition apparatus of claim 1 or 2, further comprising:
a nozzle (224) that receives powder material from the powder injection line (204) and ejects the powder material upon a substrate (250).

4. The cold spray deposition apparatus of any preceding claim, wherein the cooling channel (232a) conveys a cooling fluid from the cooling input port (208a) to the cooling output port (208b).

5. A cold spray deposition system comprising:
a cooling fluid source (262); and
the cold spray deposition apparatus of any preceding claim;
wherein the cooling input port (208a) is fluidly coupled to the cooling fluid source (262); and
the cooling output port (208b) is fluidly coupled to the cooling fluid source (262).

6. The cold spray deposition system of claim 5, wherein the cooling fluid source (262) supplies a cooling fluid to the cooling input port (208a), and wherein the cooling output port (208b) returns the cooling fluid to the cooling fluid source (262).

7. The cold spray deposition apparatus or system of claims 4 or 6, wherein the cooling fluid includes water.

8. The cold spray deposition apparatus or system of claims 4, 6 or 7, wherein the cooling fluid includes a second gas.

9. The cold spray deposition apparatus or system of claim 8, wherein the second gas includes at least one of nitrogen or carbon dioxide.

10. The cold spray deposition system of any of claims 5-9, wherein the cold spray deposition apparatus includes at least one sensor port (216), the system further comprising:
at least one sensor (258) coupled to the at least one sensor port (216),
wherein the at least one sensor (258) measures a characteristic of the chamber (214).

11. The cold spray deposition apparatus of claim 2 or system of claim 10, wherein the at least one sensor (258) includes a thermocouple that measures a temperature of the chamber (214).

12. The cold spray deposition apparatus or system of any preceding claim, wherein the cold spray deposition apparatus includes a powder injection shield (232b) that isolates the cooling channel (232a) from the gas in the chamber (214).

13. The cold spray deposition apparatus or system of any preceding claim, wherein the gas is nitrogen.

14. The cold spray deposition apparatus or system of any preceding claim, wherein the cooling channel (232a) is shaped as at least one of a coil or a helix.
